# EUROPEAN PATENT SPECIFICATION

(11) **EP 2 557 724 B1**
(45) Date of publication and mention of the grant of the patent: **02.10.2013**
(21) Application number: 11176838.8
(22) Date of filing: 08.08.2011
(51) Int. Cl.: H04L 1/16, H04L 1/18

(54) **System and method to increase link adaptation performance with multi-level feedback**
System und Verfahren zur Erhöhung der Verbindungsadaptationsleistung mit mehrstufigem Feedback
Système et procédé pour augmenter la performance d'adaptation de liaison avec un feedback multi-niveaux

(43) Date of publication of application: 13.02.2013
(73) Proprietor: BlackBerry Limited, Waterloo ON N2L 3W8 (CA)
(72) Inventor: Ekici, Ozgur, Kanata, Ontario K2K 3K1 (CA); Islam, Muhammad Khaledul, Kanata, Ontario K2K 3K1 (CA)
(74) Representative: Moore, Barry

(56) References cited:
- EP-A1- 1 986 365
- WO-A1-2009/045011
- US-A1- 2009 300 453

## Description

### FIELD OF THE DISCLOSURE

The present disclosure relates to hybrid automatic repeat request retransmission and in particular relates to adaptive modulation and coding schemes for hybrid automatic repeat request retransmission.

### BACKGROUND

Automatic Repeat reQuest (ARQ) is a method for packet data transmission that uses positive or negative acknowledgement by the receiving party to indicate to the sending party whether the data packet has been successfully received or not. If the sender does not receive an acknowledgment or receives negative acknowledgment, it usually retransmits until an acknowledgment is received from the receiving party or the number of re-transmissions exceeds a predefined threshold. The term "Hybrid ARQ" (HARQ) is used to describe any scheme that combines forward error correction (FEC) with ARQ in which data received in unsuccessful attempts are used by receiving party in FEC decoding instead of being discarded. The simplest form of HARQ is called Chase Combining (CC) wherein each retransmission repeats the first transmission, or part of it, and the receiver combines multiple received copies of the coded packet prior to decoding. Incremental redundancy (IR) is another HARQ technique wherein instead of sending simple repeats of the entire coded packet, additional redundant information is incrementally transmitted if the decoding fails on the first attempt. HARQ is used in a number of wireless technologies such as 3GPP High Speed Packet Access (HSPA) and Long Term Evolution (LTE), 3GPP2 High Rate Packet Data (HRPD).

Successful reception may depend on the modulation and coding scheme (MCS) used to send the data packet. A lower order modulation scheme, meaning less number of bits transmitted per modulated symbol, typically provides better performance than higher order modulation in a given radio channel condition, but yields lower data throughput. For example, QPSK (quadrature phase shift keying) is more robust and can tolerate higher levels of communication errors than 16QAM (quadrature amplitude modulation). However, 16QAM provides a higher data rate than QPSK.

Link adaptation is a term used in wireless communications to indicate dynamic matching of the modulation and coding scheme to the radio channel conditions. For example, in case of 3GPP high speed downlink packet access (HSDPA), rate control is implemented by the medium access control high speed (MAC-hs) entity that configures the transport format of a high speed downlink shared channel (HSDSCH) in every 2 milliseconds of transmit time interval (TTI). This results in fast adaptation of both the modulation scheme and instantaneous code rate to provide a data rate suitable for current radio conditions.

European Patent Application Publication No. EP1986365 A1 describes systems and methods for performing MCS adaptation. In one embodiment, the network performs MCS adaptation based on a threshold quality in form of a threshold. number of received acknowledgements (ACKs).

Rate control is not applicable during retransmission attempts. This means that that the transport block size and the modulation scheme as well as the number of channelization codes cannot change during retransmission. Thus, in degrading channel conditions, the retransmission of a data packet that was unsuccessfully received uses the same modulation scheme and instantaneous code rate as the first transmission. In such scenario, the data packet is never successfully received, and retransmission will continue until a maximum retry count has been reached on the physical layer and eventually the data retransmission has to be performed on the higher layers such as the radio link control (RLC) level.

### SUMMARY

The present disclosure provides a method of explicit adaptive modulation and coding scheme selection comprising: receiving, at a mobile device, a transport block targeted to the mobile device; providing an acknowledgment to a network element if the received transport block is decodable and a quality of the received transport block exceeds a threshold; providing a negative acknowledgment to the network element if the received transport block is not decodable but the quality of the received transport block exceeds the threshold; and suppressing the acknowledgment or the negative acknowledgement if the quality of the received transport block is below the threshold.

The present disclosure further provides a mobile device comprising: a processor; a communications subsystem; and memory, wherein the processor, communications subsystem and memory cooperate to: receive a transport block targeted to the mobile device; if a quality of the received transport block exceeds a threshold, providing an acknowledgment or negative acknowledgment to a network element; and if the quality of the received transport block is below the threshold, suppressing the acknowledgment or negative acknowledgement.

### BRIEF DESCRIPTION OF THE DRAWINGS

The present disclosure will be better understood with reference to the drawings, in which:
**Figure 1** is a block diagram illustrating transport block processing at a mobile device in a sample HSDPA operation;
**Figure 2** is a process diagram illustrating a method in accordance with the present disclosure;
**Figure 3** is a block diagram illustrating transport block processing in a sample HSDPA operation using the process of **Figure 2**; and
**Figure 4** is a block diagram of an exemplary mobile device capable of being used with the embodiments of the present disclosure.

### DETAILED DESCRIPTION OF THE DRAWINGS

The transport block size, modulation scheme as well as a number of channelization codes are typically kept the same during HARQ retransmission of data packets. If channel conditions remain bad during such retransmission attempts, the mobile device will not be able to decode the transmitted packet successfully. As will be appreciated, this may happen frequently in practice, especially when the serving cell providing high speed downlink shared channel (HSDSCH) cell to the mobile device changes.

In a typical HSPA network configuration, 5 HARQ processes are configured for the HSDSCH with a packet retransmission time of 10ms and a maximum retransmission count configured in Node-B as 5 to 6. These configuration parameters translate to an additional latency of 50 to 60ms due to retransmission using the same modulation which is expected to fail in deteriorating channel conditions. The high latency increases the round trip time almost twice the expected value provided that the next round of transmission is successful. A typical round trip time in HSDPA systems is about 70ms and with the above scenario the round trip time increases to around 130 ms, which negatively affects data throughput due to the acknowledged transmission nature of data calls.

Increased latency that occurs as an artifact of retransmission using the same modulation scheme may have a serious adverse impact on certain applications that use packet data services. For example, increased latency may make the circuit switched (CS) voice over HSPA channels (as described in the Third Generation Partnership Project (3GPP) *Technical Specification 25.331, "Radio Resource Control; Protocol specification" Change Request 3214*, the contents of which are incorporated herein by reference) not viable as voice service requires certain acceptable delay requirements.

Example of another feature that may suffer degradation as result of increased latency is operation of signaling radio bearer (SRB) when mapped to HSPA channels, as described in 3GPP, *Technical Specification 25*.331, *"Radio Resource Control; Protocol specification" Change Request 2600*. SRB is used for exchanging control messages and timely reception of the control messages is very important - e.g. increase latency may delay allocation of the radio resources.

Similar problems exist in the Long Term Evolution (LTE) non-adaptive retransmission. The present disclosure is not meant to be limited to HSDPA or LTE but these are merely used as examples below to provide examples of methods that are provided to force a non-adaptive modulation scheme to become an adaptive modulation scheme during HARQ retransmission.

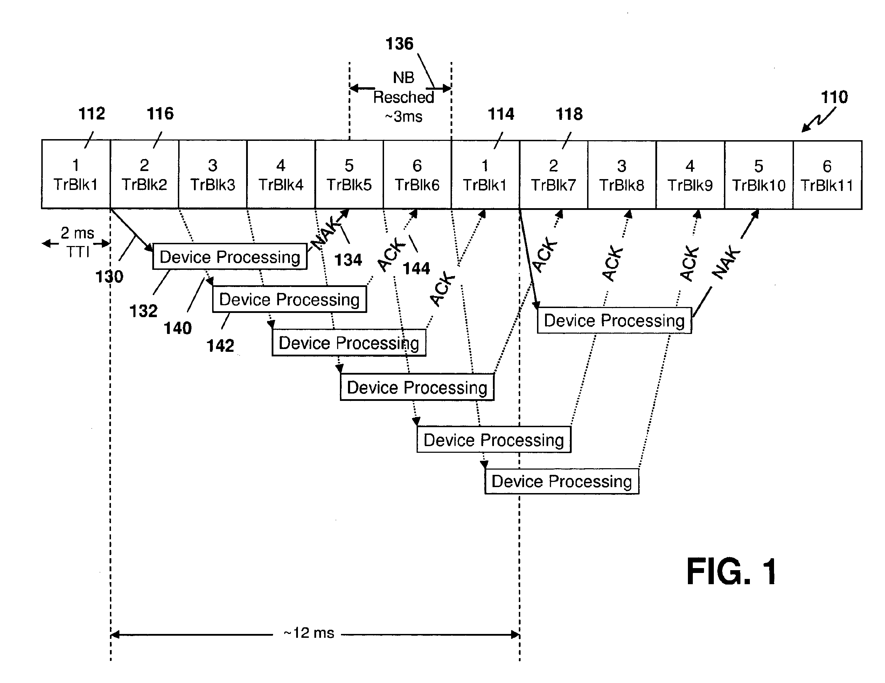

Reference is now made to **Figure 1**, which shows a plurality of HARQ process blocks **110** in a HSDPA operation at a mobile device. In the example of **Figure 1**, six HARQ processes exist, and are labeled within blocks **110** as "1", "2", ... "6". As will be appreciated by those in the art having regard to the above, after HARQ process 6 is used, HARQ process 1 is then utilized.

The labels in blocks **110** further show the transport block that is being sent from Node-B (NB) during the HARQ process block.

As seen in **Figure 1****,** a first HARQ process block **112** is used to send a first transport block on the downlink from the network to a mobile device. This is shown by arrow **130**.

A device receives the first transport block and processes the block, as shown by reference **132**.

In the example of **Figure 1**, the device was unable to successfully receive and demodulate the first transport block and therefore sends a NAK on the uplink back to the network, as shown by arrow **134**. The network then requires rescheduling, as shown by arrow **136**.

Subsequently, during the next HARQ process 1 block **114**, the first transport block is re-sent. Transport blocks **112** and **114** carry the same information content and use the same modulation scheme as well as block size.

Conversely, in the second HARQ process, as shown as block **116**, the second transport block is transmitted to a mobile device, as shown by arrow **140**. The device then processes the second transport block as shown by block **142** and is able to successfully receive and demodulate the second transport block. Thus, an acknowledgement, shown at arrow **144** is sent back to the network. At the next HARQ process 2 block, shown by reference **118**, a new transport block is sent to the mobile device.

Similarly, for the remaining HARQ processes, transport blocks are sent and acknowledged, resulting in new transport blocks being provided in the next HARQ process time slot.

From **Figure 1**, the transmit time interval is approximately 2ms. Thus, with 6 HARQ processes, the retransmission time is approximately 12ms.

One exemplary situation could be the attempt to send a large packet to a mobile device utilizing 16QAM modulation and a high code rate. This may be TrBlk1 from block **112** in **Figure 1**. The sending, in the present example, is being done as wireless channel conditions degrade.

The sending of the large packet results in a NAK being provided to the network, shown by arrow **134**. The network then needs to reschedule the next HARQ transmission block to re-send the large packet again. Since the HARQ process is continuing, the next retransmission will utilize 16QAM modulation and the high code rate, even though a lower data rate with QPSK modulation would have been better for retransmission due to the degraded channel conditions.

Such circumstances often require multiple retransmission attempts. For example, typically six attempts are observed in commercial HSPA networks. This results in lower throughput as well as unacceptable delay performance for certain applications such as CS over HSPA or SRBs mapped on HSPA.

In existing HSPA networks, the use of a higher order modulation and coding scheme may be common when the serving HSDSCH cell changes and the new serving HSDSCH cell may not know the channel quality of the mobile device or the mobile device is in an active set with non-serving pilots, among other situations.

**Table 1** below shows an example mobile device log on an exemplary commercial HSPA network.

**TABLE 1: Sample log**

| **Row #** | **Time (s)** | **sub-frame** | **CRC** | **Transport block size** | **HAP** | **Modulation type** | **Number of Codes** |
|---|---|---|---|---|---|---|---|
| **1** | 25.880 | 2 | FAIL | 4115 | 1 | 16QAM | 5 |
| **2** | 25.880 | 3 | | N/A | | | |
| **3** | 25.880 | 4 | | N/A | | | |
| **4** | 25.890 | 0 | | N/A | | | |
| **5** | 25.890 | 1 | | N/A | | | |
| **6** | 25.890 | 2 | PASS | 3090 | 0 | QPSK | 5 |
| **7** | 25.890 | 3 | FAIL | 4115 | 1 | 16QAM | 5 |
| **8** | 25.890 | 4 | FAIL | 3762 | 2 | 16QAM | 5 |
| **9** | 25.900 | 0 | FAIL | 1380 | 3 | QPSK | 4 |
| **10** | 25.900 | 1 | | N/A | | | |
| **11** | 25.900 | 2 | | N/A | | | |
| **12** | 25.900 | 3 | | N/A | | | |
| **13** | 25.900 | 4 | FAIL | 4115 | 1 | 16QAM | 5 |
| **14** | 25.910 | 0 | FAIL | 3762 | 2 | 16QAM | 5 |
| **15** | 25.910 | 1 | | N/A | | | |
| **16** | 25.910 | 2 | | N/A | | | |
| **17** | 25.910 | 3 | | N/A | | | |
| **18** | 25.910 | 4 | | N/A | | | |
| **19** | 25.920 | 0 | FAIL | 4115 | 1 | 16QAM | 5 |
| **20** | 25.920 | 1 | FAIL | 3762 | 2 | 16QAM | 5 |
| **21** | 25.920 | 2 | PASS | 1380 | 3 | QPSK | 4 |
| **22** | 25.920 | 3 | | N/A | | | |
| **23** | 25.920 | 4 | | N/A | | | |
| **24** | 25.930 | 0 | | N/A | | | |
| **25** | 25.930 | 1 | FAIL | 4115 | 1 | 16QAM | 5 |
| **26** | 25.930 | 2 | FAIL | 3762 | 2 | 16QAM | 5 |
| **27** | 25.930 | 3 | | N/A | | | |
| **28** | 25.930 | 4 | | N/A | | | |
| **29** | 25.940 | 0 | | N/A | | | |
| **30** | 25.940 | 1 | | N/A | | | |
| **31** | 25.940 | 2 | FAIL | 4115 | 1 | 16QAM | 5 |
| **32** | 25.940 | 3 | FAIL | 3762 | 2 | 16QAM | 5 |

As is seen in **Table 1** above, the block sent in row 1 is not properly decoded by a mobile device, even after 60 ms, as shown in row 31. This results in upper layers such as the radio link control (RLC) requiring retransmission.

From **Table 1**, it can be seen that packets that are transmitted with QPSK modulation have a higher chance of proper decoding due to its robustness to channel imperfections, as seen in rows 6 and 21 of the table.

In particular, **Table 1** shows 5 HARQ processes, with each sub-frame being shown in column 3 of the table. The modulation scheme is shown in the second last column and the number of codes allocated to the mobile device is shown in the last column.

The hybrid ARQ process (HAP) for each transmission is shown in the 8^{th} column.

Thus, for row 1, at time 25.880, a transport block of 4115 bits is sent on sub-frame 2 using HARQ process 1. The modulation scheme is 16QAM with 5 codes allocated to the mobile device.

Moving down the table to row 7, the same HARQ process is shown again. The 4115 bits are transported utilizing 16QAM with 5 codes allocated to the mobile device and this again fails. The same HARQ process is then shown in rows 13, 19, 25 and 31 and continues to fail.

Conversely, in row 6, 3090 bits are transported utilizing QPSK modulation with 5 codes allocated to the mobile device. In this case, the bits are successfully received and decoded and therefore this process passes.

As will be appreciated, the resending of the HARQ process 1 over 60 ms makes CS voice over HSPA or SRBs mapped on HSPA not viable. For a typically conversational class application such as voice, the packet delay should be strictly maintained under reasonable time limits. The maximum mount-to-ear delay is in the order of 250ms. Assuming that the delay for the radio network controller plus core network is approximately 100 ms, the total delay for HARQ processes on the physical and MAC layers should be strictly below 150ms. Hence, assuming that both end users are HSDPA users, the tolerable one way delay for HARQ should be under 75ms. The addition of 50 to 60 ms delay on top of regular performance would exceed the delay budget designed for voice over Internet protocol (VoIP) or CS voice over HSPA and cause a sub-optimal user experience.

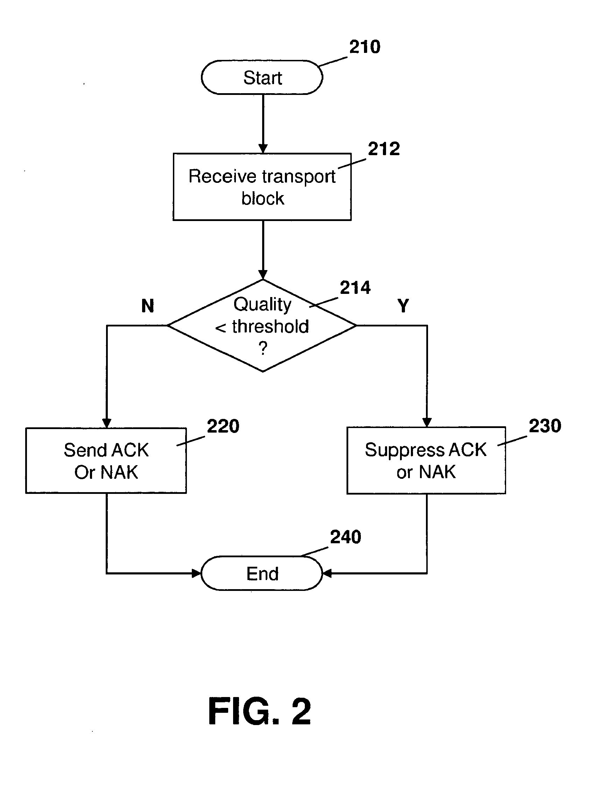

Reference is now made to **Figure 2**, which shows an exemplary method in accordance with the present disclosure.

The process of **Figure 2** starts at block **210** and proceeds to block **212** in which a mobile device receives a transport block. The transport block is received and associated with a specific HARQ process.

The process then proceeds from block **212** to block **214** in which the quality of the transmission is checked against a threshold.

The check in block **214** can use any thresholds to evaluate the level of reliability of decodability of the received transport block. In one embodiment, this may be achieved by setting a Yamamoto bit to remember if, at any stage in a Viterbi trellis, the distance between the survivor path and the discarded path is smaller than a Yamamoto threshold. In one embodiment, this method is similar to the decision making process of reception of the high speed shared control channel (HS-SCCH) at the mobile device to determine whether the transmission is intended for the mobile device.

In other embodiments the threshold may be determined based on signal quality or other determining factors, and the present disclosure is not meant to be limited to any specific determination in block **214**.

From block **214**, if the channel quality is greater than a threshold, the process proceeds to block **220** in which an ACK or a NAK is sent based on the received transport block. The ACK would be sent if the transport block was received correctly and properly decoded. The NAK would be sent if the transport block could not be properly decoded but the quality was greater than a threshold.

From block **220** the process proceeds to block **240** and ends.

Conversely, from block **214**, if the quality is less than a threshold the process proceeds to block **230**. At block **230** the mobile device suppresses the sending of a response to the received transport block. In other words, since the channel quality is less than a threshold, the mobile device suppresses the sending of an ACK or a NAK at block **230** to the Node B which acts as a Base Station Transceiver in a HSPA network.

From block **230** the process proceeds to block **240** and ends.

The network (Node B) does not receive either an ACK or a NAK in response to block **230** and the initial transmission attempt, and will assume that the mobile device may have missed the initial transmission on the downlink. In other words, the network will assume that either the mobile device could not decode the HS-SCCH on the downlink or the ACK or NAK response on the uplink on the high speed physical dedicated control channel (HS-PDCCH) was lost due to bad channel conditions.

With such assumptions, the node B will stop the current HARQ process, flush the HARQ process buffer and start a fresh HARQ process from scratch with a modulation and transport block size more suitable for current channel conditions.

Thus, based on the suppression of the ACK or NAK at block **230**, the network element exits a redundant implicit link adaption stage (where the modulation scheme and the transport block size are kept the same) and instead uses an explicit link adaption where a new transport block is transmitted with a more suitable modulation and coding scheme.

As will be appreciated by those in the art having regard to the above, a benefit of exiting the HARQ process and thus entering explicit link adaption is reduced delay. While relying on implicit link adaption alone may be sufficient from a system throughput point of view, the end user service quality may not be acceptable from a delay perspective. The implementation on the device side to evaluate the level of reliability or decodability of the received transport block as described above with regard to block **214** ensures that the mobile device can determine whether or not the received transport block is good enough.

Since the mobile device is at the receiving end of the downlink transmission, only the mobile device has information on whether the received initial transport block has a very poor quality or the device has almost decoded it. At one end of the spectrum, if the transport block is received with very poor quality or not at all, then the mobile device and network are better off with a fresh HARQ process with a more suitable modulation and coding scheme that match current channel conditions. On the other hand, if the mobile device has almost decoded the packet and just needs a few more parity bits to pass the cyclic redundancy check (CRC), then another HARQ retransmission would suffice. This can be done regardless of whether the HARQ utilizes incremental redundancy or chase combining.

At present, the mobile device responds with a NAK in both the scenarios described earlier. Therefore, the network has no information whether to change the modulation and coding scheme or not. The method shown in **Figure 2**, provides a mechanism to the mobile device to inform the network so that the network can make a proper decision to mitigate the above-mentioned problems.

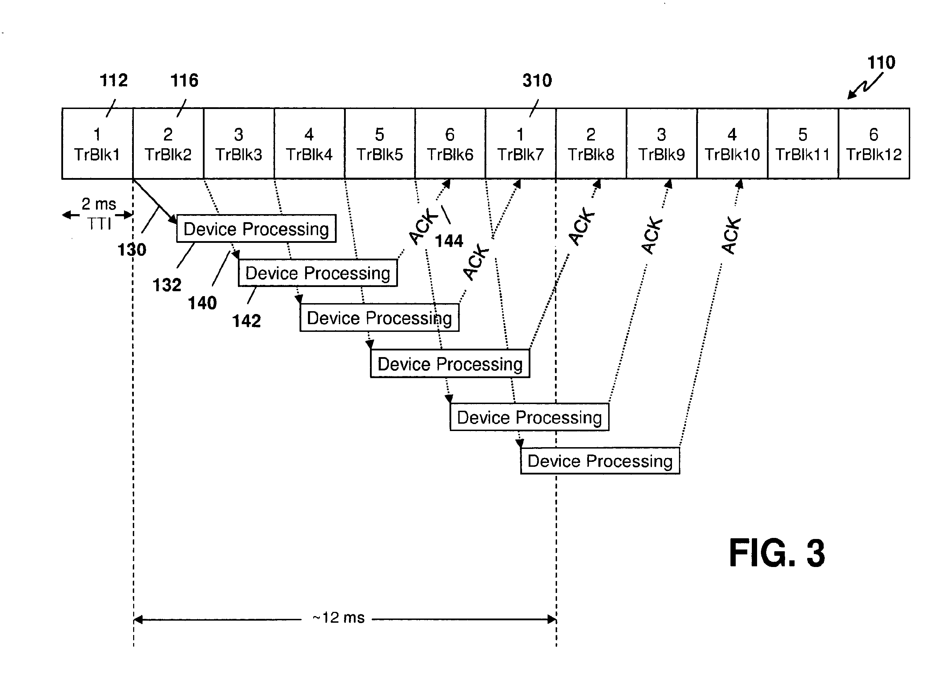

Reference is now made to **Figure 3**. **Figure 3** shows the example of **Figure 1** in which block **132** determines, through device processing, that the quality of the received transport block is below a threshold. In this case, the NAK **134** from **Figure 1** is suppressed.

In response, the network receives neither an ACK or a NAK and at the next HARQ process 1, shown by block **310**, the example of **Figure 3** shows the transmission of transmit block 7. As will be appreciated, transport block 7 may contain some or all of the data of transport block 1, and is encoded with a modulation and coding scheme more appropriate to meet channel conditions.

The method of **Figure 3** can increase the overall network throughput as it minimizes avoidable unnecessary retransmissions. In networks with packet acknowledgement schemes such as TCP/IP, the maximum effective data throughput is not necessarily equal to the system's peak rate. The latency can reduce the overall throughput to the time required to acknowledge the data packet. In other words, large peak bit rates do not result in better user experience when the latency is too large.

As an example, throughput performance of a typical mobile device is illustrated below. The physical layer peak data rate of HSPA category 10 is 14 mega bits per second (Mbps), which is computed as 27952 / 2 or 13.9 Mbps assuming transmission of maximum transport block size of 27952 bits transmitted in 2ms TTI. This peak data rate is calculated with the assumption of all HARQs being fully utilized and no retransmission is triggered. If 6 HARQ processes are configured on the device, then the retransmission behavior can be illustrated in the example of **Figure 1** above.

As can be seen, the mobile device can assist yielding improved throughput by proactively adapting to channel conditions in a timely manner compared to conventional scheme. Reference is now made to **Table 2** below.

**TABLE 2: Data Throughput of category 10 HSDPA with packet retransmissions**

| | ***Transport block size (bits)*** | ***Transmission duration (ms)*** | ***Data rate (Mbps)*** |
|---|---|---|---|
| ***No re-tx with 16QAM*** | 27952 | 2 | 13.976 |
| ***1 re-tx with 16QAM*** | 27952 | 12 | 2.329 |
| ***2 re-tx with 16QAM*** | 27952 | 24 | 1.165 |
| ***3 re-tx with 16QAM*** | 27952 | 36 | 0.776 |
| ***4 re-tx with 16QAM*** | 27952 | 48 | 0.582 |
| ***5 re-tx with 16QAM*** | 27952 | 60 | 0.465 |
| ***1 re-tx with QPSK*** | 14115 | 12 | **1.176** |

As seen from **Table 2**, utilizing 16QAM modulation coding with a 27952 bit transport block requiring no retransmissions provides a data rate of almost 14 Mbps.

If one retransmission is required with 16QAM and the same transport block size is utilized, then the overall packet transmission duration is 12 ms and throughput decreases to 2.3 Mbps.

If two retransmissions with 16QAM are required with the transport block size of 27952, the overall packet transmission duration is 24ms and the throughput is 1.165 Mbps.

Similarly, with three retransmissions at the same transport block size the transmission duration is 36ms and the throughput is .77 Mbps. With four retransmissions the transmission duration is 48ms and the throughput is .582 Mbps. With five retransmissions the transmission duration is 60ms with a data rate of .465 Mbps.

Conversely, with one retransmission and the changing of the modulation and coding scheme to QPSK and the transport block size to 14115, the transmission duration is 12 ms and the throughput is 1.176 Mbps.

Thus, as can be seen from **Table 2** above, if more than one retransmission is required then it is better to move directly to the modulation and coding scheme that will more likely be successfully received at the mobile device.

Further, as will be appreciated by those skilled in the art having regard to the above, if the initial transmission is received with very poor quality, the probability of the occurrence of increased retransmission attempts is higher if full incremental redundancy (IR) is used as implicit rate adaptation compared to chase combining (CC) for soft decoding. This is due to the fact that during retransmission, not all redundancy versions provide the same amount of information about the transport block. For instance, for turbo codes, the systematic bits are of higher importance that the parity bits. Therefore, the initial transmissions typically have all systematic bits and some parity bits. If full IR is implemented in a network, all the retransmissions will have highly punctured systematic bits and therefore include mostly parity bits. During HSDPA transmission, if mobile device cannot decode the initial transmission it will respond to the network with negative acknowledgement (NAK) on the uplink, triggering the retransmission of the transport block with new redundancy versions.

In a current implementation, if a network uses full IR as the HARQ method and if the mobile device receives a first transmission that it is unable to decode, then triggering a NAK and repeatedly receiving retransmitted parity bits would not help decode the transport block.

If chase combining is implemented on the network side, then retransmissions will include the same coded bits as the initial transmission (systematic bits are prioritized). This may increase the chance of decoding the transmitted transport block.

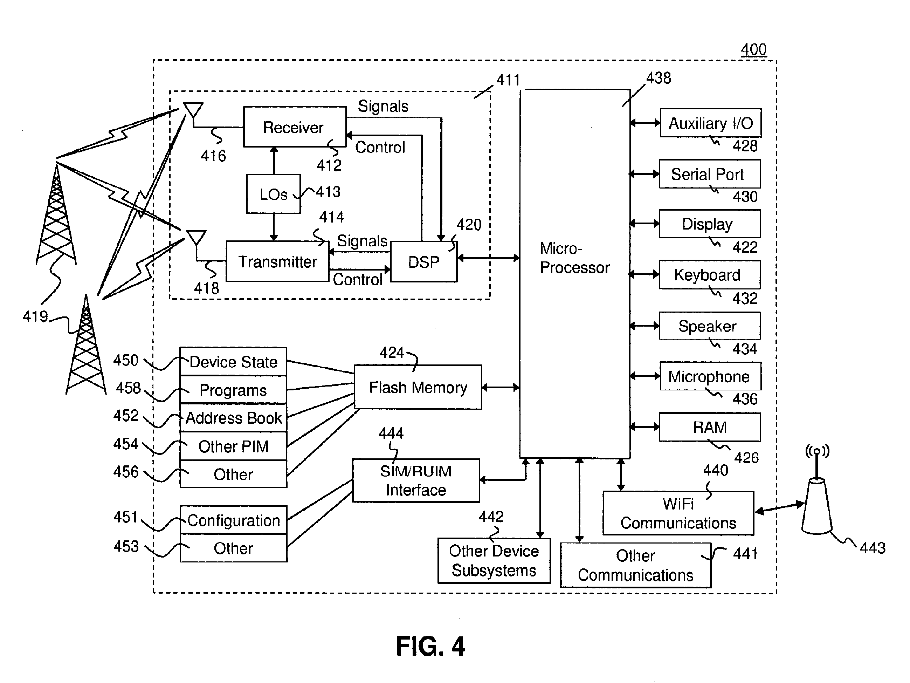

The above can be implemented on any mobile device and the present disclosure is not meant to be limited to any particular mobile device. One example of a mobile device on which the above could be implemented is shown below with regard to **Figure 4****.**

Mobile device **400** is a two-way wireless communication device. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **400** is enabled for two-way communication, it can incorporate a communication subsystem **411**, including both a receiver **412** and a transmitter **414**, as well as associated components such as one or more, antenna elements **416** and **418**, local oscillators (LOs) **413**, and a processing module such as a digital signal processor (DSP) **420** The particular design of the communication subsystem **411** depends upon the communication network in which the device is intended to operate.

When required network registration or activation procedures have been completed, mobile device **400** may send and receive communication signals over the network **419**. As illustrated in **Figure 4**, network **419** can comprise of multiple base stations communicating with the mobile device.

Signals received by antenna **416** through communication network **419** are input to receiver **412**, which may perform such common receiver functions as signal amplification, frequency down conversion, filtering, channel selection and the like, and in the example system shown in **Figure 4**, analog to digital (A/D) conversion. A/D conversion of a received signal allows more complex communication functions such as demodulation and decoding to be performed in the DSP **420**. In a similar manner, signals to be transmitted are processed, including modulation and encoding for example, by DSP **420** and input to transmitter **414** for digital to analog conversion, frequency up conversion, filtering, amplification and transmission over the communication network **419** via antenna **418**. DSP **420** not only processes communication signals, but also provides for receiver and transmitter control. For example, the gains applied to communication signals in receiver **412** and transmitter **414** may be adaptively controlled through automatic gain control algorithms implemented in DSP **420**.

Network access requirements will also vary depending upon the type of network **419.** In some networks network access is associated with a subscriber or user of mobile device **400**. A mobile device may require a removable user identity module (RUIM) or a subscriber identity module (SIM) card in order to operate on a network. The SIM/RUIM interface **444** is normally similar to a card-slot into which a SIM/RUIM card can be inserted and ejected. The SIM/RUIM card hold many key configurations **451**, and other information **453** such as identification, and subscriber related information.

Mobile device **400** includes a processor **438** which controls the overall operation of the device. Communication functions, including at least data and voice communications, are performed through communication subsystem **411**. Processor **438** also interacts with further device subsystems such as the display **422**, flash memory **424**, random access memory (RAM) **426**, auxiliary input/output (I/O) subsystems **428**, serial port **430**, one or more keyboards or keypads **432**, speaker **434**, microphone **436**, other communication subsystem **440** such as a short-range communications subsystem and any other device subsystems generally designated as **442**. Serial port **430** could include a USB port or other port known to those in the art.

Some of the subsystems shown in **Figure 4** perform communication-related functions, whereas other subsystems may provide "resident" or on-device functions. Notably, some subsystems, such as keyboard **432** and display **422***,* for example, may be used for both communication-related functions, such as entering a text message for transmission over a communication network, and device-resident functions such as a calculator or task list.

Operating system software used by the processor **438** can be stored in a persistent store such as flash memory **424**, which may instead be a read-only memory (ROM) or similar storage element (not shown). Specific device applications, or parts thereof, may be temporarily loaded into a volatile memory such as RAM **426**. Received communication signals may also be stored in RAM **426**.

As shown, flash memory **424** can be segregated into different areas for both computer programs **458** and program data storage **450**, **452**, **454** and **456**. These different storage types indicate each program can allocate a portion of flash memory **424** for their own data storage requirements. Processor **438**, in addition to its operating system functions, can enable execution of software applications on the mobile device. A predetermined set of applications which control basic operations, including at least data and voice communication applications for example, will normally be installed on mobile device **400** during manufacturing. Other applications could be installed subsequently or dynamically.

A software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application can have the ability to send and receive data items, via the wireless network **419**. In an embodiment, the PIM data items are seamlessly integrated, synchronized and updated, via the wireless network **419**, with the mobile device user's corresponding data items stored or associated with a host computer system. Further applications may also be loaded onto the mobile device **400** through the network **419**, an auxiliary I/O subsystem **428**, serial port **430**, short-range communications subsystem **440** or any other suitable subsystem **442**, and installed by a user in the RAM **426** or a non-volatile store (not shown) for execution by the microprocessor **438**. Such flexibility in application installation increases the functionality of the device and may provide enhanced on-device functions, communication-related functions, or both.

In a data communication mode, a received signal such as a text message or web page download will be processed by the communication subsystem **411** and input to the microprocessor **438**, which further processes the received signal for element attributes for output to the display **422**, or alternatively to an auxiliary I/O device **428**.

A user of mobile device **400** may also compose data items such as email messages for example, using the keyboard **432**, which can be a complete alphanumeric keyboard or telephone-type keypad, in conjunction with the display **422** and possibly an auxiliary I/O device **428**. Such composed items may then be transmitted over a communication network through the communication subsystem **411**.

For voice communications, overall operation of mobile device **400** is similar, except that received signals would be output to a speaker **434** and signals for transmission would be generated by a microphone **436**. Alternative voice or audio I/O subsystems, such as a voice message recording subsystem, may also be implemented on mobile device **400**. Although voice or audio signal output is accomplished primarily through the speaker **434**, display **422** may also be used to provide an indication of the identity of a calling party, the duration of a voice call, or other voice call related information for example.

Serial port **430** in **Figure 4** would normally be implemented in a personal digital assistant (PDA)-type mobile device for which synchronization with a user's desktop computer (not shown) may be desirable, but is an optional device component. Such a port **430** would enable a user to set preferences through an external device or software application and would extend the capabilities of mobile device **400** by providing for information or software downloads to mobile device **400** other than through a wireless communication network. The alternate download path may for example be used to load an encryption key onto the device through a direct and thus reliable and trusted connection to thereby enable secure device communication. Serial port **430** can further be used to connect the mobile device to a computer to act as a modem.

WiFi Communications Subsystem **440** is used for WiFi Communications and can provide for communication with access point **440**.

Other communications subsystem(s) **441**, such as a short-range communications subsystem, are further components that may provide for communication between mobile device **400** and different systems or devices, which need not necessarily be similar devices. For example, the subsystem(s) **441** may include an infrared device and associated circuits and components or a Bluetooth™ communication module to provide for communication with similarly enabled systems and devices.

The embodiments described herein are examples of structures, systems or methods having elements corresponding to elements of the techniques of the present application. The above written description may enable those skilled in the art to make and use embodiments having alternative elements that likewise correspond to the elements of the techniques of the present application. The intended scope of the techniques of the above application thus includes other structures, systems or methods that do not differ from the techniques of the present application as described herein, and further includes other structures, systems or methods with insubstantial differences from the techniques of the present application as described herein.

## Claims

1. A method of explicit adaptive modulation and coding scheme selection comprising:
receiving, at a mobile device, a transport block targeted for the mobile device;
providing an acknowledgment to a network element if the received transport block is decodable and a quality of the received transport block exceeds a threshold;
providing a negative acknowledgment to the network element if the received transport block is not decodable but the quality of the received transport block exceeds the threshold; and
suppressing the acknowledgment or the negative acknowledgment if the quality of the received transport block is below the threshold.

2. The method of claim 1, wherein the transport block is received over a high speed downlink packet access channel.

3. The method of claim 2, wherein the acknowledgement or the negative acknowledgement are hybrid automatic repeat request responses.

4. The method of any one of claims 1 to 3, wherein the network element is an element within a long term evolution network.

5. The method of any one of claims 1 to 4, wherein the quality is determined to be below the threshold based on a Yamamato bit that provides a binary indication of quality of the transport block.

6. The method of any one of claims 1 to 5, wherein, due to the suppressing, the network element chooses a new modulation and coding scheme to send data from the transport block to the mobile device.

7. The method of any one of claims 1 to 6, wherein the threshold is chosen based on a probability of successfully decoding a subsequent transport block utilizing an existing modulation and coding scheme.

8. The method of any one of claims 1 to 7, wherein the threshold is set higher if the network element uses chase combining rather than incremental redundancy.

9. A mobile device comprising:
a processor;
a communications subsystem; and
memory,
wherein the mobile device is adapted to perform the method of any one of claims 1 to 8.

## Patentansprüche

1. Ein Verfahren einer expliziten adaptiven Modulations- und Codierungsschema-Auswahl, das aufweist:
Empfangen, an einer mobilen Vorrichtung, eines Transportblocks, der an die mobile Vorrichtung gerichtet ist;
Vorsehen einer Bestätigung an ein Netzwerkelement, wenn der empfangene Transportblock decodierbar ist und eine Qualität des empfangenen Transportblocks eine Schwelle übersteigt;
Vorsehen einer negativen Bestätigung an das Netzwerkelement, wenn der empfangene Transportblock nicht decodierbar ist, aber die Qualität des empfangenen Transportblocks die Schwelle übersteigt; und
Unterdrücken der Bestätigung oder der negativen Bestätigung, wenn die Qualität des empfangenen Transportblocks unter der Schwelle ist.

2. Das Verfahren gemäß Anspruch 1, wobei der Transportblock über einen "High Speed Downlink Packet Access"-Kanal empfangen wird.

3. Das Verfahren gemäß Anspruch 2, wobei die Bestätigung oder die negative Bestätigung "Hybrid Automatic Repeat Request"-Antworten sind.

4. Das Verfahren gemäß einem der Ansprüche 1 bis 3, wobei das Netzwerkelement ein Element in einem "Long Term Evolution"-Netzwerk ist.

5. Das Verfahren gemäß einem der Ansprüche 1 bis 4, wobei die Qualität als unter der Schwelle bestimmt wird basierend auf einem Yamamato-Bit, das eine binäre Angabe einer Qualität des Transportblocks vorsieht.

6. Das Verfahren gemäß einem der Ansprüche 1 bis 5, wobei, aufgrund der Unterdrückung, das Netzwerkelement ein neues Modulations- und Codierungsschema auswählt, um Daten von dem Transportblock an die mobile Vorrichtung zu senden.

7. Das Verfahren gemäß einem der Ansprüche 1 bis 6, wobei der Schwellenwert basierend auf einer Wahrscheinlichkeit eines erfolgreichen Decodierens eines nachfolgenden Transportblocks unter Verwendung eines existierenden Modulations- und Codierungsschemas ausgewählt wird.

8. Das Verfahren gemäß einem der Ansprüche 1 bis 7, wobei die Schwelle höher gesetzt wird, wenn das Netzwerkelement "Chase Combining" anstelle einer inkrementellen Redundanz verwendet.

9. Eine mobile Vorrichtung, die aufweist:
einen Prozessor;
ein Kommunikationsteilsystem; und
einen Speicher,
wobei die mobile Vorrichtung ausgebildet ist, das Verfahren gemäß einem der Ansprüche 1 bis 8 durchzuführen.

## Revendications

1. Procédé de sélection de schéma explicite de modulation et de codage adaptatifs comprenant le fait :
de recevoir, au niveau d'un dispositif mobile, un bloc de transport ciblé pour le dispositif mobile ;
de fournir un accusé de réception à un élément de réseau si le bloc de transport reçu peut être décodé et une qualité du bloc de transport reçu dépasse un seuil ;
de fournir un accusé de réception négatif à l'élément de réseau si le bloc de transport reçu ne peut pas être décodé mais la qualité du bloc de transport reçu dépasse le seuil ; et
de supprimer l'accusé de réception ou l'accusé de réception négatif si la qualité du bloc de transport reçu est inférieure au seuil.

2. Procédé de la revendication 1, dans lequel le bloc de transport est reçu sur un canal d' accès par paquets en liaison descendante haut débit.

3. Procédé de la revendication 2, dans lequel l'accusé de réception ou l'accusé de réception négatif sont des réponses de demande de répétition automatique hybride.

4. Procédé de l'une quelconque des revendications 1 à 3, dans lequel l'élément de réseau est un élément dans un réseau d'évolution à long terme.

5. Procédé de l'une quelconque des revendications 1 à 4, dans lequel la qualité est déterminée comme étant inférieure au seuil sur la base d'un bit Yamamato qui fournit une indication binaire de la qualité du bloc de transport.

6. Procédé de l'une quelconque des revendications 1 à 5, dans lequel, en raison de la suppression, l'élément de réseau choisit un nouveau schéma de modulation et de codage pour envoyer des données à partir du bloc de transport au dispositif mobile.

7. Procédé de l'une quelconque des revendications 1 à 6, dans lequel le seuil est choisi sur la base d'une probabilité de décodage avec succès d'un bloc de transport ultérieur utilisant un schéma de modulation et de codage existant.

8. Procédé de l'une quelconque des revendications 1 à 7, dans lequel le seuil est réglé de façon à être plus élevé si l'élément de réseau utilise une combinaison de Chase au lieu de redondance incrémentale.

9. Dispositif mobile comprenant :
un processeur ;
un sous-système de communications ; et
une mémoire,
ledit dispositif mobile étant conçu pour exécuter le procédé de l'une quelconque des revendications 1 à 8.
